# EUROPÄISCHE PATENTANMELDUNG

(11) **EP 2 233 017 A1**
(43) Veröffentlichungstag der Anmeldung: **29.09.2010**
(21) Anmeldenummer: 10156471.4
(22) Anmeldetag: 15.03.2010
(51) Int. Cl.: A24C 5/34, G01N 21/952

(54) **Prüfung von stabförmigen Artikeln der Tabak verarbeitenden Industrie**

(30) Priorität: 23.03.2009 DE 102009014018
(71) Anmelder: HAUNI Maschinenbau AG, 21033 Hamburg (DE)
(72) Erfinder: Plähn, Dieter, 21357, Barum (DE); Ibel, Michael, 25469, Halstenbek (DE); Overath, Matthias, 21035, Hamburg (DE)
(74) Vertreter: Grebner, Christian Georg Rudolf

(57) **Zusammenfassung**

Die Erfindung betrifft ein Verfahren zum Prüfen von stabförmigen Artikeln der Tabak verarbeitenden Industrie (50), insbesondere Filterzigaretten (50), mittels einer Prüfeinrichtung (44, 45), wobei die stabförmigen Artikel (50) auf einem Förderorgan (34, 35) zur Prüfeinrichtung (44, 45) gefördert werden. Die Erfindung betrifft ferner eine Anordnung zum Prüfen von stabförmigen Artikeln der Tabak verarbeitenden Industrie (50), insbesondere Filterzigaretten (50), mit einem Förderorgan (34, 35) zum, vorzugsweise queraxialen, Fördern der stabförmigen Artikel (50) und mit einer an dem Förderorgan (34, 35) vorgesehenen Prüfeinrichtung (44, 45) zum Prüfen der auf dem Förderorgan (34, 35) geförderten Artikel (50). Weiterhin betrifft die Erfindung eine Maschine der Tabak verarbeitenden Industrie, insbesondere Filteransetzmaschine.

Das Verfahren zeichnet sich dadurch aus, dass vor Eintritt der stabförmigen Artikel (50) in eine Prüfzone (46, 47) der Prüfeinrichtung (44, 45) die in der Umgebungsluft vorhandene und durch diese transportierten Partikel (38) mittels einer an dem Förderorgan (34, 35) angeordneten Auffang- und Abfördereinrichtung (40, 43) aufgefangen und abgefördert werden. Die Anordnung wird dadurch weitergebildet, dass bezogen auf die Förderrichtung der stabförmigen Artikel (50) stromauf vor der Prüfeinrichtung (44, 45) eine Auffang- und Abfördereinrichtung (40, 43) zum Auffangen der von der bewegten Umgebungsluft transportierten Partikel (38) und zum Abfördern der aufgefangenen Partikel (38) an dem Förderorgan (34, 35) vorgesehen ist.

## Beschreibung

Die Erfindung betrifft ein Verfahren zum Prüfen von stabförmigen Artikeln der Tabak verarbeitenden Industrie, insbesondere Filterzigaretten, mittels einer Prüfeinrichtung, wobei die stabförmigen Artikel auf einem Förderorgan zur Prüfeinrichtung gefördert werden. Die Erfindung betrifft ferner eine Anordnung zum Prüfen von stabförmigen Artikeln der Tabak verarbeitenden Industrie, insbesondere Filterzigaretten, mit einem Förderorgan zum, insbesondere queraxialen, Fördern der stabförmigen Artikel und mit einer an dem Förderorgan vorgesehenen Prüfeinrichtung zum Prüfen der auf dem Förderorgan geförderten Artikel. Weiterhin betrifft die Erfindung eine Maschine der Tabak verarbeitenden Industrie, insbesondere Filteransetzmaschine.

Unter der Bezeichnung "MAX" ist eine Filteransetzmaschine der Patentanmelderin bekannt.

Als Filteransetzmaschine wird eine Vorrichtung bzw. Maschine zur Herstellung von Filterzigaretten verstanden mit Mitteln zur Aufnahme von Tabakstöcken doppelter Länge mit Mitteln zum Schneiden dieser doppeltlangen Tabakstöcke in Tabakstöcke einfacher Länge, mit Mitteln zum Einbringen von Filterstopfen doppelter Länge zwischen die Tabakstöcke einfacher Länge, mit Mitteln zum Verbinden des doppeltlangen Filterstopfens mit den beiden Tabakstöcken einfacher Länge durch Umhüllen mit einem Belagpapierblättchen, das mittels einer Schneideinrichtung von einem zugeführten Belagpapierstreifen abgetrennt wird, mit Mitteln zum nachfolgenden Ausführen eines Trennschnitts durch den doppeltlangen Filterstopfen, so dass Filterzigaretten normaler Gebrauchslänge entstehen.

Nach der Herstellung der Filterzigaretten werden eine Dichtigkeitsprüfung und/oder mindestens eine Kopfendenprüfung und/oder eine Ventilationsgrad-Prüfung und/oder mindestens eine optische Prüfung der Zigaretten in der Filteransetzmaschine ausgeführt. Bei der Dichtigkeitsprüfung wird auf einer Prüftrommel jede einzelne Zigarette mit Prüfluft beaufschlagt. Weicht der gemessene Druck dabei von einem Sollwert ab, ist die betreffende Zigarette fehlerhaft und wird ausgeworfen. Bei der Kopfendenprüfung prüft ein beispielsweise kapazitiver Messwertaufnehmer die Tabakdichte in den Kopfenden der Zigaretten. Bei der Ventilationsgrad-Prüfung werden die Zigaretten mit Prüfluft beaufschlagt. Das gemessene Druckverhältnis Ausgang/Eingang verhält sich proportional zum Ventilationsgrad der Zigarette.

Darüber hinaus werden an einer Filteransetzmaschine die Produkte bzw. hergestellten stabförmigen Artikel bzw. Filterzigaretten durch optische Prüfeinrichtungen untersucht. Bei einer optischen Prüfung werden üblicherweise Qualitätsmerkmale an den Produkten der Tabak verarbeitenden Industrie detektiert wie Löcher, Dimensionen, Objektidentifizierung, Stempel, Leimauftrag, Flecken, das Vorhandensein von Filterelementen, Beschädigung und dergleichen. Unter Produkten der Tabak verarbeitenden Industrie werden im Rahmen der vorliegenden Patentanmeldung insbesondere stabförmige Artikel bzw. Objekte wie Zigaretten, Filterstäbe, Multisegmentfilterstäbe und dergleichen verstanden.

Zur optischen Kontrolle werden üblicherweise Zeilen- oder Matrixkameras eingesetzt, die wegen der Anforderungen an die Abbildungs- und Aufnahmequalität mit aufwändigen, großen Objektiven ausgestattet sind. Um z.B. die gesamte Zigarettenlänge ohne Verzerrung und Beeinträchtigung der Schärfe zu betrachten, ist ein großer Abstand des Messobjektes zur Kamera notwendig. Es kommt an einigen Stellen an der Maschine der Tabak verarbeitenden Industrie, beispielsweise einer Filteransetzmaschine, vor, dass der optische Weg mit Spiegeln mehrfach gefaltet werden muss.

Die Beleuchtung der Messobjekte bzw. der stabförmigen Produkte der Tabak verarbeitenden Industrie wird mit separaten Lichtquellen realisiert, die wegen des großen Abstandes zum Objekt hohe Lichtstärken besitzen müssen. Es ist unter anderem auch bekannt, das Licht unter Intensitätsverlust mit Lichtleitkabeln an das Messobjekt heranzuführen. Die Wahrscheinlichkeit, dass in der staubigen Umgebung einer Maschine der Tabak verarbeitenden Industrie herumfliegende Partikel, wie z.B. Tabakstaub, Tabakkrümel, Papierstückchen, die optische Kontrolle stören und es zu Fehlbewertungen kommt, ist groß und kann wegen des großen Abstandes der verwendeten Kontrolleinrichtungen bzw. Prüfeinrichtungen nur durch aufwändige Maßnahmen reduziert werden.

Beispielsweise ist aus DE-A-10 2004 040 912 eine Einrichtung zur optischen Kontrolle von Produkten der Tabak verarbeitenden Industrie bekannt, die eine Bilderfassungsvorrichtung umfasst, wobei Gradientenindexlinsen verwendet werden, um den Abstand zwischen der Bilderfassungsvorrichtung und den zu kontrollierenden Produkten zu verringern.

Weiterhin offenbart EP-B-0 812 548 eine Vorrichtung zur Überwachung der äußeren Unversehrtheit von Zigaretten, die an einer Mehrzahl von Matrixkameras queraxial auf einer Fördertrommel vorbeigefördert werden und auf dem Förderweg um ihre Längsachse rotiert werden.

Ferner ist bekannt, dass beispielsweise während der Herstellung von Filterzigaretten an einer Filteransetzmaschine aufgrund der Handhabung bzw. der Manipulation der Filterzigaretten Mengen an Tabakstaub oder Kurztabakteilchen entstehen, die sich in der Maschine lose anlagern und diese zusetzen können. Aus DE-A-103 17 770 ist ein beispielsweise ein Verfahren zum Reinigen eine Zigarettenherstellmaschine beschrieben, wobei die Maschine für die Durchführung der Reinigung stillgesetzt ist.

Ausgehend von diesem Stand der Technik besteht die Aufgabe der vorliegenden Erfindung darin, die, insbesondere optische, Prüfung von stabförmigen Artikeln, wie z.B. Filterzigaretten, zu verbessern, wobei der Aufwand möglichst gering gehalten werden soll.

Gelöst wird die Aufgabe durch ein Verfahren zum Prüfen von stabförmigen Artikeln der Tabak verarbeitenden Industrie, insbesondere Filterzigaretten, mittels einer Prüfeinrichtung, wobei die stabförmigen Artikel auf einem Förderorgan zur Prüfeinrichtung gefördert werden, das dadurch weitergebildet wird, dass vor Eintritt der stabförmigen Artikel in eine Prüfzone der Prüfeinrichtung die in der Umgebungsluft vorhandenen und durch diese transportierten Partikel mittels einer an dem Förderorgan angeordneten Auffang- und Abfördereinrichtung aufgefangen und abgefördert werden.

Somit werden erfindungsgemäß stromauf vor Eintritt der stabförmigen Artikel in eine Prüfzone der Prüfeinrichtung und benachbart zu dieser Umgebungsluft am Förderorgan und die in der Umgebungsluft vorhandenen Partikel mittels einer an dem Förderorgan angeordneten Auffang- und Abfördereinrichtung bzw. einer Sammeleinrichtung, z.B. Saugeinrichtung, entfernt.

Die Erfindung beruht auf dem Gedanken, dass vor dem Eintritt der stabförmigen Artikel bzw. Filterzigaretten in den Erfassungsbereich bzw. Prüfbereich einer Prüfeinrichtung gezielt die Prüfmessung störende Partikel, die durch die Bewegung der Förderorgane bzw. der Prüftrommeln mitgerissen werden, unmittelbar vor der stattfindenden Prüfung der Artikel auf dem Förderorgan automatisch entfernt bzw. abgeführt werden. Dadurch wird beispielsweise die Belastung von Partikeln an den Förderorganen bzw. den Fördertrommeln deutlich herabgesetzt, wodurch die Qualität der Prüfung signifikant verbessert wird, da weniger Störsignale durch die in der Luftströmung mitgerissenen und vor der Prüfung entfernten Partikel, die gemäß der Erfindung nunmehr aufgefangen und abgefördert werden, entstehen, so dass die Qualität der Prüfung gesteigert wird. Somit wird eine partikelarme Umgebung im Erfassungsbereich der Prüfeinrichtung erreicht.

Beispielsweise wird eine erfindungsgemäße Auffang- und Absaugeinrichtung an einer Kopfabtasttrommel bzw. an einer Prüftrommel in einer Filteransetzmaschine zwischen dem Übergabepunkt der stabförmigen Artikel von einer vorangehenden Fördertrommel auf einer Prüftrommel, an der eine Prüfung der stabförmigen Artikel stattfindet, und dem Erfassungsbereich bzw. der Prüfzone der Prüfeinrichtung angeordnet, wodurch die durch die Trommelbewegung bzw. durch die infolge der Rotationsbewegung der Trommel in der Luft mitbewegten Partikel, wie z.B. Tabakkrümel oder dergleichen, im trommelnahen Bereich durch die Auffang- und Absaugeinrichtung aufgefangen und abgesaugt werden. Insbesondere werden somit die Tabakkrümel bzw. die Partikel in ihrer Flugbahn aufgefangen.

Darüber hinaus zeichnet sich das Verfahren weiterhin dadurch aus, dass die Umgebungsluft sowie die von der Umgebungsluft bewegten bzw. mitbewegten Partikel in ihrer Flugbahn über die, vorzugsweise gesamte, Breite des Förderorgans und/oder über die, vorzugsweise gesamte, Breite der stabförmigen Artikel lokal aufgefangen und abgefördert werden, so dass die Partikel bzw. Tabakkrümel unmittelbar vor der Prüfzone bzw. dem Messort entfernt werden, wodurch die Konzentration der Partikel in den Messbereichen der Prüfeinrichtungen signifikant bzw. drastisch herabgesetzt werden.

Überdies ist es günstig, wenn die in der Umgebungsluft vorhandenen und durch Umgebungsluft bewegten Partikel über wenigstens eine entgegen der Förderrichtung des Förderorgans ausgerichtete Öffnung der Auffang- und Abfördereinrichtung gelangen und nachfolgend durch diese abgefördert werden. Hierbei treten die von der Umgebungsluft mitgerissenen Partikel in ihrer Flugbahn in die Auffangöffnung ein und werden von der Absaugeinrichtung abgefördert und somit aus der Umgebung der Fördertrommel entfernt. Hierzu kann mittels eines Sauggebläses ein Unterdruck an der Saugeinrichtung angelegt werden.

Alternativ ist an Stelle des Abförderns mittels ausschließlich Saugluft auch ein Abfördern mittels eines Bandförderers oder einer Förderschnecke im Rahmen der Erfindung vorgesehen. Auch eine Kombination von mehreren Auffang- bzw. Sammel- und Abfördereinrichtungen ist denkbar.

Ferner ist es in einer Ausgestaltung des Verfahrens vorteilhaft, dass das Auffangen und Abfördern durch Saugluft z.B. von einer Saugeinrichtung unterstützt wird oder ist, wobei die Saugleistung der Auffang- und Abfördereinrichtung derart eingestellt ist oder wird, dass eine laminare Luftströmung der angesaugten Umgebungsluft ausgebildet wird oder ist.

Vorzugsweise ist oder wird die Saugleistung der Saugeinrichtung derart eingestellt, dass eine im Wesentlichen laminare Luftströmung der angesaugten Umgebungsluft ausgebildet wird oder ist. Dadurch wird eine turbulente Strömung bzw. Verwirbelung infolge der gleichmäßigen Luftströmung im trommelnahen Bereich vor dem Eintritt der Filterzigaretten auf der Prüftrommel in die Prüfzone vermieden. Aufgrund der Rotationsbewegung der Fördertrommel, an der die Prüfung der stabförmigen Artikel stattfindet, ist die höchste Strömungsgeschwindigkeit der Umgebungsluft, die von der Trommel mitbewegt wird, im Bereich der Trommeloberfläche am größten und nimmt im Entfernungsbereich von der Oberfläche von 10 mm bis 20 mm signifikant ab. Typischerweise beträgt die Strömungsgeschwindigkeit der mitbewegten Luft in wenigen Zentimetern Entfernung von der Trommeloberfläche zwischen 0,1 m bis 0,5 m pro Sekunde.

Darüber hinaus wird die Aufgabe gelöst durch eine Anordnung zum Prüfen von stabförmigen Artikeln der Tabak verarbeitenden Industrie, insbesondere Filterzigaretten, mit einem Förderorgan zum, vorzugsweise queraxialen, Fördern der stabförmigen Artikel und mit einer an dem Förderorgan vorgesehenen Prüfeinrichtung, insbesondere optischen Prüfeinrichtung, zum Prüfen der auf dem Förderorgan geförderten Artikel, die dadurch weitergebildet ist, dass bezogen auf die Förderrichtung der stabförmigen Artikel stromaufwärts von der Prüfeinrichtung bzw. stromauf der Prüfeinrichtung eine Auffang- und Abfördereinrichtung zum Auffangen bzw. Sammeln der in der Umgebungsluft vorhandenen und von der Umgebungsluft (mit)-bewegten Partikel und zum, vorzugsweise gleichzeitigen, Abfördern der aufgefangenen bzw. gesammelten Partikel an dem Förderorgan vorgesehen ist.

Dadurch werden lokal an den Fördertrommeln bzw. Förderorganen, auf denen die stabförmigen Artikel bzw. Filterzigaretten queraxial gefördert werden, lokale Abförder- und insbesondere Absaugeinrichtungen für die von den Trommeln mitgerissenen Partikel bzw. Tabakkrümel vorgesehen, um die Belastung mit Partikeln, die zu Störsignalen in der Prüfzone der Prüfeinrichtung führen können, herabzusetzen. Somit wird die Prüfsicherheit und der Wirkungsgrad einer Filteransetzmaschine deutlich erhöht, da Störsignale durch Tabakkrümel oder Partikel oder dergleichen bei insbesondere optischen Prüfungen der Filterzigaretten signifikant herabgesetzt und damit unberechtigte Produktauswürfe vermieden werden. Insgesamt wird die Konzentration von (mitbewegten) Partikeln zwischen der Abfördereinrichtung und der Prüfzone aufgrund des Auffangprozesses und Abförderns deutlich vermindert.

Gemäß einer bevorzugten Ausführungsform ist dabei weiter vorgesehen, dass die Auffang- und Abfördereinrichtung eine Öffnung aufweist, welche sich über die, vorzugsweise gesamte, Breite des Förderorgans und/oder über die, vorzugsweise gesamte, Breite der stabförmigen Artikel erstreckt, wobei insbesondere die Öffnung im Wesentlichen rechteckförmig ausgebildet ist. Insbesondere ist die Auffang- und Abfördereinrichtung als Absaugeinrichtung ausgebildet, die eine wirksame Ansaugfläche als Öffnung aufweist, welche sich über die, vorzugsweise gesamte, Breite des Förderorgans und/oder über die, vorzugsweise gesamte, Breite der stabförmigen Artikel erstreckt.

Hierbei ist es günstig, wenn die Auffang- und Abfördereinrichtung wenigstens eine Öffnung aufweist, die entgegen der Förderrichtung des Förderorgans ausgerichtet ist.

Die Anordnung zeichnet sich außerdem dadurch aus, dass die Auffang- und Abfördereinrichtung als Saugeinrichtung, die wenigstens ein Saugrohr aufweist, ausgebildet ist, wobei insbesondere das Saugrohr in einem Abstand zur Oberfläche des Förderorgans, insbesondere der Prüftrommel, von bis zu 15 cm angeordnet ist. Beispielsweise weist als Auffang- und Abfördereinrichtung an der Fördertrommel eine (Ab-)Saugeinrichtung wenigstens ein Absaugrohr auf, wobei insbesondere das (Ab-)Saugrohr in einem Abstand zur Oberfläche des Förderorgans, insbesondere der Fördertrommel, von bis zu 15 cm angeordnet ist. An das Absaugrohr ist über eine Saugleitung ein Sauggebläse angeschlossen, so dass ein Unterdruck am Saugrohr anliegt. Vorteilhafterweise sind bekannte Stellmittel zum Einstellen des Unterdrucks bzw. der Luftgeschwindigkeit vorgesehen.

Dazu ist weiter zweckmäßigerweise vorgesehen, dass das Saugrohr zu den Mulden des Förderorgans zur Aufnahme der stabförmigen Artikel bzw. zu den stabförmigen Artikeln auf dem Förderorgan im Wesentlichen axialparallel bzw. zur Rotationsachse einer Fördertrommel (Prüftrommel) achsparallel ausgerichtet ist. Hierdurch wird eine wirksame Absaugung der Fremdpartikel in der Umgebungsluft im oberflächennahen Bereich der Förderorgane bzw. der Fördertrommeln erreicht, da das Absaugrohr zu den Mulden des Förderorgans zur Aufnahme der stabförmigen Artikel oder zu den stabförmigen Artikeln auf dem Förderorgan im Wesentlichen axialparallel ausgerichtet ist.

Des Weiteren ist es vorteilhaft, wenn die Saugleistung der Saugeinrichtung derart eingestellt ist oder wird, dass eine im Wesentlichen laminare Luftströmung der angesaugten Umgebungsluft, insbesondere aus dem oberflächennahen Bereich des Förderorgans, ausgebildet wird oder ist.

Insbesondere wird eine zuverlässige Absaugung bzw. Entfernung der Umgebungsluft bzw. der Partikel in der Umgebungsluft im Nahbereich der Förderorgane dadurch erreicht, dass das Absaugrohr wenigstens eine Saugöffnung aufweist, die entgegen der Förderrichtung des Förderorgans ausgerichtet ist, wodurch die Partikel, die von der Fördertrommel mitgerissen werden, von dem Saugrohr aufgefangen werden, da die Partikel unmittelbar in die Saugöffnung fliegen bzw. in diese eingesaugt werden.

Darüber hinaus wird die Aufgabe gelöst durch eine Maschine der Tabak verarbeitenden Industrie, insbesondere Filteransetzmaschine, mit einer voranstehend beschriebenen Anordnung zum Prüfen von stabförmigen Artikeln, insbesondere Filterzigaretten. Zur Vermeidung von Wiederholungen wird auf die obigen Ausführungen ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch eine Filteransetzmaschine in einer Vorderansicht,
- Fig. 2: schematisch eine Trommelanordnung einer Filteransetzmaschine mit zwei Prüfeinrichtungen und
- Fig. 3: schematisch eine Teilansicht einer Fördertrommel mit einer benachbart zur Fördertrommel angeordneten Saugeinrichtung.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

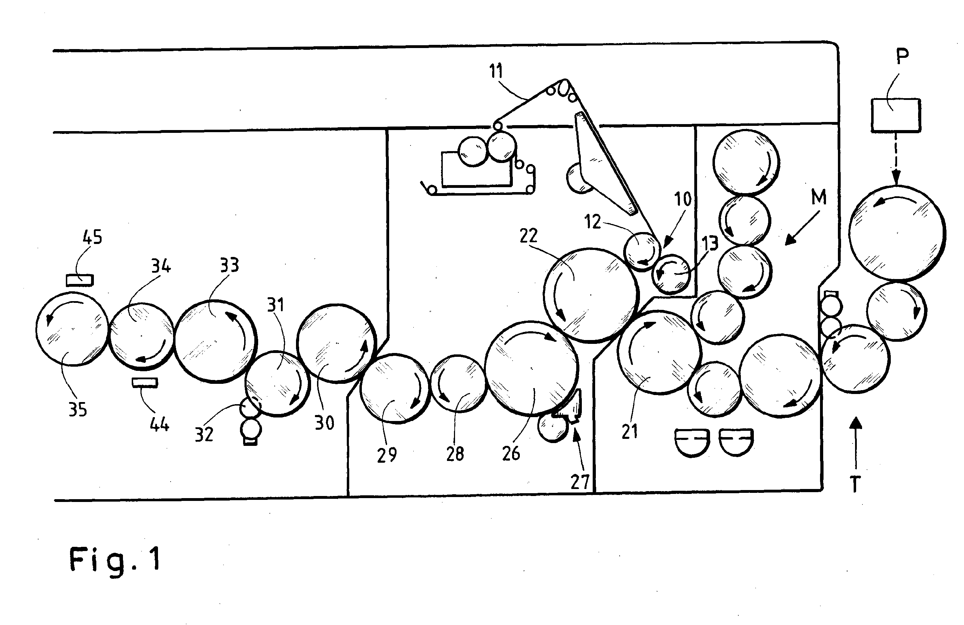

In Fig. 1 ist eine Filteransetzmaschine in einer Vorderansicht ausschnittsweise dargestellt, wobei die Filteransetzmaschine über eine Trommelanordnung T zur Zuführung von Tabakstöcken von einer schematisch eingezeichneten Zigarettenstrangmaschine P Tabakstöcke doppelter Gebrauchslänge empfängt. Eine Zigarettenstrangmaschine ist unter der Bezeichnung "PROTOS" der Patentanmelderin bekannt.

Auf ihrem Förderweg zu einer Zusammenstelltrommel 21 werden die Tabakstöcke doppelter Gebrauchslänge geschnitten und längsaxial gespreizt. Auf der Zusammenstelltrommel 21 werden über eine weitere Trommelanordnung M doppeltlange Filterstopfen transportiert, die jeweils zwischen zwei längsaxial beabstandete Tabakstöcke eingefügt werden. Hierdurch wird auf der Zusammenstelltrommel 21 eine Folge von queraxial hintereinander angeordneten Tabakstock-Filterstopfen-Tabakstock-Gruppen gebildet.

Die zusammengestellten Artikelgruppen werden von der Zusammenstelltrommel 21 an eine Fördertrommel 22 übergeben und zu einem Belagapparat 10 die zusammengestellten Tabakstock-Filterstopfen-Tabakstock-Gruppen transportiert. In DE-C-39 18 137 ist ausführlich ein Belagapparat beschrieben, der vollumfänglich in den Inhalt der vorliegenden Anmeldung aufgenommen wird.

Ein beleimter und geförderter Belagpapierstreifen 11 wird im Belagapparat 10 auf einer Schneidtrommel 12 von den Messern einer Messertrommel 13 in Belagblättchen bzw. Verbindungsblättchen geschnitten. Die geschnittenen Verbindungsblättchen werden jeweils an die Artikelgruppen bzw. Tabakstock-Filterstopfen-Tabakstock-Gruppen auf der Fördertrommel 22 übergeben bzw. angeheftet.

Nach dem Anheften der geschnittenen und der einzelnen Verbindungsblättchen an jeweils eine Artikelgruppe werden die Artikelgruppen weiter zu einer nachfolgenden Rolltrommel 26 und einer Rolleinrichtung 27 transportiert, mittels der die Verbindungsblättchen vollständig um die Tabakstock-Filterstopfen-Tabakstock-Gruppen herumgewickelt werden. Die Rolleinrichtung 27 besteht in einer Ausgestaltung aus einem Stegrad, einer Rollhand mit einer Rollfläche und ausgangsseitig einer Rollwalze, wobei die Rollfläche und die Rolltrommel 26 einen Rollkanal bilden, in dem Artikelgruppen mit den Verbindungsblättchen umwickelt werden, womit doppeltlange Filterzigaretten gebildet werden.

Die doppeltlangen Filterzigaretten werden nachfolgend an eine Fördertrommel 28 und weiter nachfolgend an eine weitere Fördertrommel 29 übergeben und für den weiteren Bearbeitungsprozess an einer Filteransetzmaschine bereitgestellt.

Von der Fördertrommel 29 werden die doppeltlangen Filterzigaretten über eine Fördertrommel 30 zu einer Schneidtrommel 31 gefördert, an der ein Schneidmesser 32 angeordnet ist, welches aus den doppeltlangen Filterzigaretten durch einen mittigen Trennschnitt Filterzigaretten einfacher Gebrauchslänge herstellt.

Die Filterzigaretten werden anschließend von der Schneidtrommel 31 an eine Spreiztrommel 33 übergeben. Auf der Spreiztrommel 33 werden die Filterzigarettenpaare längsaxial voneinander beabstandet und anschließend an eine erste Prüftrommel 34 übergeben. An der Prüftrommel 34 ist ein erstes Prüforgan 44 angeordnet, welches die Filterzigaretten einer ersten Prüfung, z.B. einer Kopfendenprüfung, unterzieht.

Im Rahmen der Erfindung ist es möglich, dass die hergestellten Filterzigaretten an dem ersten Prüforgan 44 einer Dichtigkeitsprüfung und/oder einer Kopfendenprüfung und/oder einer Ventilationsprüfung unterzogen werden. Darüber hinaus ist es im Rahmen der Erfindung möglich, dass mittels des Prüforgans 44 eine optische Prüfung der Zigaretten auf der Trommel 34 durchgeführt wird.

Anschließend werden die Zigaretten von der Prüftrommel 34 an eine nachfolgende zweite Prüftrommel 35 übergeben, an der ein zweites Prüforgan 45 angeordnet ist, um die Zigaretten weiteren Qualitätsprüfungen und/oder mindestens einer der zuvor genannten an der Prüftrommel 34 nicht durchgeführten Prüfung zu unterziehen.

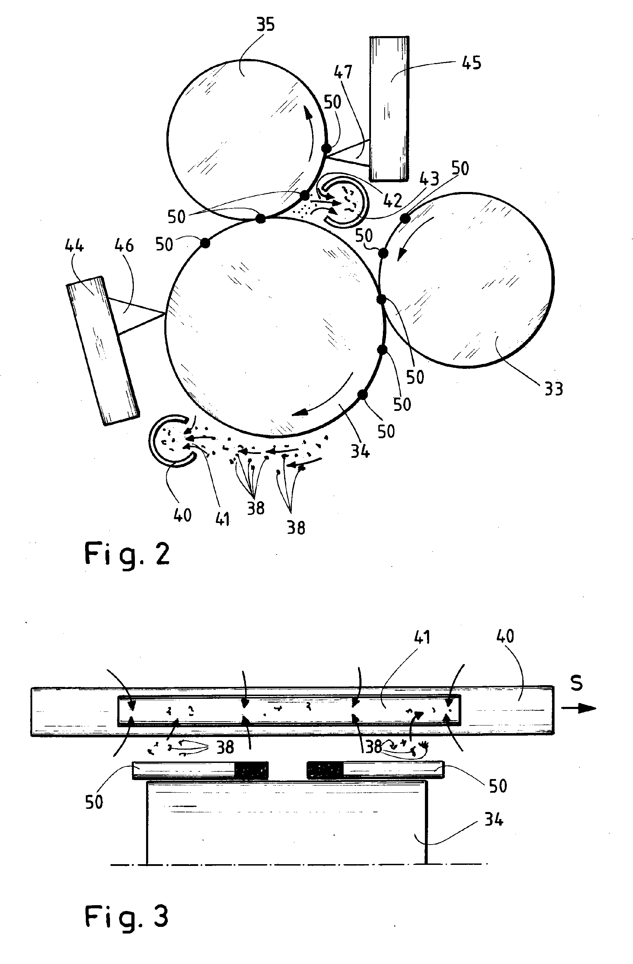

Fig. 2 zeigt schematisch eine Ansicht einer Anordnung von Trommeln, bestehend aus einer Spreiztrommel 33 und zwei Prüftrommeln 34, 35. Von der Spreiztrommel 33 werden längsaxial gespreizte Paare von Filterzigaretten 50 an die Prüftrommel 34 übergeben. Unter Rotation der Trommel 33, 34 werden die Filterzigaretten 50 an dem ersten Prüforgan 44 vorbeitransportiert, wobei die Filterzigaretten 50 hierbei eine Prüfzone 46 des Prüforgans 44 durchlaufen. In der Prüfzone 46 werden die Filterzigaretten 50 einer entsprechenden Prüfung im Hinblick auf vorbestimmte Eigenschaften der Filterzigaretten 50 untersucht.

Da die Prüftrommel 34 unter Rotation die Filterzigaretten 50 queraxial fördert, werden Tabakkrümel sowie weitere Partikel, die in der Umgebung der Prüftrommel 34 bzw. in der trommelnahen Umgebung der Prüftrommel 34 vorhanden sind, durch die Rotation der Prüftrommel 34 in der Luft mitgerissen, so dass die schematisch eingezeichneten Tabakkrümel bzw. Partikel 38 in Richtung des Förderorgans 44 mitbewegt werden.

In Förderrichtung der Filterzigaretten 50 ist vor dem Prüforgan 44 ein Saugrohr 40 an der Prüftrommel 34 derart angeordnet, so dass die in der Umgebungsluft mitgeförderten Partikel 38 bereits allein aufgrund ihrer Flugbahn aber auch unterstützt durch Saugluft über eine Öffnung 41 in das Innere des Absaugrohrs 40 gelangen, von wo die Partikel 38 mittels Saugluft abgefördert werden. Somit wird die Prüfzone 46 des Prüforgans 44 weitestgehend partikelfrei gehalten bzw. wird die Prüfung an dem Prüforgan verbessert, da weniger Partikel in die Prüfzone 46 gelangen.

Durch die Entfernung der in der Umgebungsluft mitgeführten bzw. mitbewegten Partikel 38 werden vor dem Eintritt der Filterzigaretten 50 in die Prüfzone 46 die Konzentration der Partikel in der Umgebung der Oberfläche der Prüftrommel 34 stark herabgesetzt, so dass weniger Partikel mit in die Prüfzone 46 aufgrund der durch die rotierende Prüftrommel 34 erzeugten Luftströmung mitbewegt werden und letztlich erheblich weniger Störungen durch Partikel während der durchgeführten Prüfung vom Prüforgan 44 entstehen.

Anschließend werden die Filterzigaretten 50 an eine weitere Prüftrommel 35 übergeben, wobei an der zweiten Prüftrommel 35 das Prüforgan 45 angeordnet ist, das eine Prüfzone 47 aufweist, in der die Filterzigaretten 50 geprüft werden. Bezogen auf die Förderrichtung der Filterzigaretten 50 ist vor dem Eintritt der Filterzigaretten 50 in die Prüfzone 47 in Förderrichtung ein zweites Saugrohr 43 mit einer Saugöffnung 42 angeordnet, so dass Partikel in der Umgebungsluft der Prüftrommel 35 mittels Luftströmung in das Innere des Saugrohrs 43 gelangen und aus dem Prüfbereich 47 der Prüftrommel für die Filterzigaretten 50 entfernt werden.

Die in der Figur 2 gezeigten Absaugrohre 40, 43 sind bevorzugt von kreisförmigem Querschnitt, es kann jedoch durchaus erforderlich sein, diese rechteckförmig oder trapezförmig in Abhängigkeit des Einbauorts auszubilden.

Insbesondere wird bei den Saugrohren 40 bzw. 43 ein derartiger Unterdruck angelegt, so dass eine laminare Luftströmung der aus der Umgebung angesaugten Umgebungsluft ausgebildet wird oder ist. Hierdurch werden auf besonders einfache Weise die Partikel 38 aus dem trommelnahen Bereich der Fördertrommel 34, 35 entfernt.

In Fig. 3 ist schematisch ein Abschnitt der Prüftrommel 34 dargestellt, wobei benachbart zur Prüftrommel 34 das Saugrohr 40 angeordnet ist. Das Saugrohr 40 und insbesondere die Eintrittsöffnung 41 sind achsparallel zu den auf der Prüftrommel queraxial geförderten Filterzigaretten 50 in den Mulden der Prüftrommel 34 ausgerichtet. Die Eintritts-bzw. Saugöffnung 41 des Saugrohrs 40 ist dabei breiter als die Breite der längsaxial beanstandeten Filterzigaretten 50 auf der Prüftrommel 34 sowie breiter als die Breite der Prüftrommel 34. Die Eintritts- bzw. Saugöffnung 41 kann als langes Rechteck oder Oval ausgebildet sein, wobei das Verhältnis von Breite zur Höhe im Bereich von 10:1 bis 20:1 liegt.

Im Ausführungsbeispiel ist der Saugluftanschluss S bevorzugt einseitig seitlich in längsaxialer Richtung vorgesehen. Bauartbedingt können auch andere Anschlussarten vorgesehen sein, beispielsweise kann über ein trichterförmiges Übergangsstück ein mittig angeordneter radialer Luftanschluss vorgesehen sein.

In bevorzugten Ausführungsformen sind die Prüftrommeln 34, 35 auch als Kopfabtasttrommeln ausgebildet. Insbesondere werden durch die erfindungsgemäßen Saugeinrichtungen an den Prüftrommeln 34, 35 die Prüfzonen bzw. die optischen Bereiche der Prüfsensorik von Partikeln freigehalten. Hierbei wird die Konzentration der Partikel in den Prüfzonen an den Prüftrommeln deutlich, z.B. um den Faktor 2 bis 5, d.h. auf 50 % bis 20 %, herabgesetzt.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Belagapparat
- 11: Belagpapierstreifen
- 12: Saugwalze
- 13: Messerwalze
- 21: Zusammenstelltrommel
- 22: Fördertrommel
- 26: Rolltrommel
- 27: Rolleinrichtung
- 28: Trommel
- 29: Trommel
- 30: Fördertrommel
- 31: Schneidtrommel
- 32: Schneidmesser
- 33: Spreiztrommel
- 34: Prüftrommel
- 35: Prüftrommel
- 38: Partikel
- 40: Rohr
- 41: Öffnung (Auffang-, Eintritts-, Saugöffnung)
- 42: Öffnung (Auffang-, Eintritts-, Saugöffnung)
- 43: Rohr
- 44: Prüforgan
- 45: Prüforgan
- 46: Prüfzone
- 47: Prüfzone
- 50: Filterzigarette
- M: Trommelanordnung (Filterstopfen)
- T: Trommelanordnung (Tabakstöcke)
- S: Saugluftanschluss
- P: Zigarettenstrangmaschine

## Patentansprüche

1. Verfahren zum Prüfen von stabförmigen Artikeln der Tabak verarbeitenden Industrie (50), insbesondere Filterzigaretten (50), mittels einer Prüfeinrichtung (44, 45), wobei die stabförmigen Artikel (50) auf einem Förderorgan (34, 35) zur Prüfeinrichtung (44, 45) gefördert werden, **dadurch gekennzeichnet, dass** vor Eintritt der stabförmigen Artikel (50) in eine Prüfzone (46, 47) der Prüfeinrichtung (44, 45) die in der Umgebungsluft vorhandene und durch diese transportierten Partikel (38) mittels einer an dem Förderorgan (34, 35) angeordneten Auffang- und Abfördereinrichtung (40, 43) aufgefangen und abgefördert werden.

2. Verfahren nach Anspruch 1, **dadurch gekennzeichnet, dass** die mit der Umgebungsluft bewegten Partikel (38) in ihrer Flugbahn über die, vorzugsweise gesamte, Breite des Förderorgans (34) und/oder über die, vorzugsweise gesamte, Breite der stabförmigen Artikel (50) aufgefangen und abgefördert werden.

3. Verfahren nach Anspruch 1 oder 2, **dadurch gekennzeichnet, dass** die in der Umgebungsluft vorhandenen und durch Umgebungsluft bewegten Partikel (38) über wenigstens eine entgegen der Förderrichtung des Förderorgans (34, 35) ausgerichtete Öffnung (41, 42) der Auffang- und Abfördereinrichtung (40, 43) gelangen und nachfolgend durch diese abgefördert werden.

4. Verfahren nach einem der Ansprüche 1 bis 3, **dadurch gekennzeichnet, dass** das Auffangen und Abfördern durch Saugluft unterstützt wird oder ist, wobei die Saugleistung der Auffang- und Abfördereinrichtung (40) derart eingestellt ist oder wird, dass eine laminare Luftströmung der angesaugten Umgebungsluft ausgebildet wird oder ist.

5. Anordnung zum Prüfen von stabförmigen Artikeln der Tabak verarbeitenden Industrie (50), insbesondere Filterzigaretten (50), mit einem Förderorgan (34, 35) zum, vorzugsweise queraxialen, Fördern der stabförmigen Artikel (50) und mit einer an dem Förderorgan (34, 35) vorgesehenen Prüfeinrichtung (44, 45) zum Prüfen der auf dem Förderorgan (34, 35) geförderten Artikel (50), **dadurch gekennzeichnet, dass** bezogen auf die Förderrichtung der stabförmigen Artikel (50) stromauf vor der Prüfeinrichtung (44, 45) eine Auffang- und Abfördereinrichtung (40, 43) zum Auffangen der von der bewegten Umgebungsluft transportierten Partikel (38) und zum Abfördern der aufgefangenen Partikel (38) an dem Förderorgan (34, 35) vorgesehen ist.

6. Anordnung nach Anspruch 5, **dadurch gekennzeichnet, dass** die Auffang- und Abfördereinrichtung (40, 43) eine Öffnung aufweist, welche sich über die, vorzugsweise gesamte, Breite des Förderorgans (34, 35) und/oder über die, vorzugsweise gesamte, Breite der stabförmigen Artikel (50) erstreckt, wobei insbesondere die Öffnung im Wesentlichen rechteckförmig ausgebildet ist.

7. Anordnung nach Anspruch 5 oder 6, **dadurch gekennzeichnet, dass** die Auffang- und Abfördereinrichtung (40, 43) wenigstens eine Öffnung (41, 42) aufweist, die entgegen der Förderrichtung des Förderorgans (34, 35) ausgerichtet ist.

8. Anordnung nach einem der Ansprüche 5 bis 7, **dadurch gekennzeichnet, dass** die Auffang- und Abfördereinrichtung (40, 43) als Saugeinrichtung, die wenigstens ein Saugrohr (40, 43) aufweist, ausgebildet ist, wobei insbesondere das Saugrohr (40, 43) in einem Abstand zur Oberfläche des Förderorgans (34, 35), insbesondere der Prüftrommel (34, 35), von bis zu 15 cm angeordnet ist.

9. Anordnung nach Anspruch 8, **dadurch gekennzeichnet, dass** das Saugrohr (40, 43) zu den Mulden des Förderorgans (34, 35) zur Aufnahme der stabförmigen Artikel (50) bzw. zu den stabförmigen Artikeln (50) auf dem Förderorgan (34, 35) im Wesentlichen axialparallel ausgerichtet ist.

10. Anordnung nach Anspruch 8 oder 9, **dadurch gekennzeichnet, dass** die Saugleistung der Saugeinrichtung (40, 43) derart eingestellt ist oder wird, dass eine im Wesentlichen laminare Luftströmung der angesaugten Umgebungsluft ausgebildet wird oder ist.

11. Maschine der Tabak verarbeitenden Industrie, insbesondere Filteransetzmaschine, mit einer Anordnung nach einem der Ansprüche 5 bis 10.
